# EUROPÄISCHE PATENTSCHRIFT

(11) **EP 3 581 595 B1**
(45) Veröffentlichungstag und Bekanntmachung des Hinweises auf die Patenterteilung: **24.03.2021**
(21) Anmeldenummer: 18177652.7
(22) Anmeldetag: 14.06.2018
(51) Int. Cl.: C08F 212/08, C08F 8/30, B01J 41/13, B01J 45/00

(54) **VERFAHREN ZUR HERSTELLUNG VON AMIDOMETHYLIERTEN, VINYLAROMATISCHEN PERLPOLYMERISATEN**
METHOD FOR PRODUCING AMIDOMETHYLATED VINYL AROMATIC BEAD POLYMERS
PROCÉDÉ DE FABRICATION DE POLYMÈRES EN PERLES VINYLAROMATIQUES AMIDOMÉTHYLES

(43) Veröffentlichungstag der Anmeldung: 18.12.2019
(73) Patentinhaber: LANXESS Deutschland GmbH, 50569 Köln (DE)
(72) Erfinder: KOOP, Bernd, 50668 Köln (DE)

(56) Entgegenhaltungen:
- WO-A1-2018/001698
- DE-A1- 2 211 134

## Beschreibung

Die Erfindung betrifft ein Verfahren zur Herstellung von amidomethylierten, vinylaromatischen Perlpolymerisaten.

Die Herstellung von amidomethylierten, vinylaromatischen Perlpolymerisaten ist seit langem bekannt. Aus der DE-A 2211134 ist bekannt, dass vernetzte Styrolperlpolymerisate mit N-Hydroxymethylphthalimid in Gegenwart von Quellungsmitteln und Friedel-Crafts Katalysatoren kondensiert werden können. Nachteilig an diesem Verfahren ist, dass zunächst das N-Hydroxymethylphthalimid aus Phthalimid hergestellt werden muss, dass Wasser während der Reaktion abdestilliert werden muss, dass Halogenwasserstoffsäure zugegeben werden muss und dass die Ausbeute der amidomethylierten, vinylaromatischen Perlpolymerisate nicht zufriedenstellend ist.

Ein weiteres Verfahren zur Herstellung von amidomethylierten, vinylaromatischen Perlpolymerisaten, bei dem in einem Schritt Phthalimid, Paraformaldehyd, Schwefelsäure in Gegenwart von 1,2-Dichlorethan als Quellungsmittel und dem vinylaromatischen Perlpolymerisaten umgesetzt werden, ist aus der US-A 4232125 bekannt. Unterschiedliche Quellungsmittel als Alternativen für 1,2-Dichlorethan werden dort genannt. Nachteilig an diesem Verfahren ist ebenfalls, dass die Ausbeute der amidomethylierten, vinylaromatischen Perlpolymerisaten nicht zufriedenstellend ist.

Ein weiteres Einschrittverfahren zur Herstellung von amidomethylierten, vinylaromatischen Perlpolymerisaten, bei dem als Quellungsmittel 1,3-Dichlorpropan zum Einsatz kommt, ist aus der EP-A 3012272 bekannt. Dieses Quellungsmittel lässt sich technisch nur aufwendig von dem Produkt abtrennen und ist daher ökonomisch benachteiligt. Auch hier sind die Ausbeuten an amidomethylierten vinylaromatischen Perlpolymerisaten weiterhin zu gering.

Es bestand daher weiterhin das Bedürfnis nach einem Verfahren, dass die Nachteile des Standes der Technik überwindet und mit dem amidomethylierte, vinylaromatische Perlpolymerisate effizient hergestellt werden können.

Es wurde nun überraschend gefunden, dass die Umsetzung vinylaromatischer Perlpolymerisate mit kondensierten Formaldehyden und Protonensäuren und in Gegenwart von ausgewählten bromierten Quellungsmitteln unter geeigneten Reaktionsbedingungen zu amidomethylierten, vinylaromatischen Perlpolymerisaten unter hohen Ausbeuten abläuft.

Gegenstand der vorliegenden Erfindung ist daher ein Verfahren zur Herstellung amidomethylierter, vinylaromatischer Perlpolymerisate bei dem mindestens ein vinylaromatisches Perlpolymerisat mit mindestens einer Verbindung der Formel (I) oder deren Salze 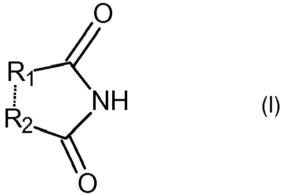 wobei R₁ = -CH-(C₁-C₆-Alkyl) oder -CH₂- und R₂ = -CH-(C₁-C₆-Alkyl) oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH=,
und mindestens ein kondensiertes Formaldehyd in Gegenwart mindestens einer Protonensäure und in Gegenwart mindestens einer Verbindung der Formel (II)

H₍₃₋ₙ₎C(Br)ₙR₃ (II)

wobei R₃ = C₁-C₄-Alkyl, Br, H oder C₁-C₄-Bromalkyl ist und n = 0 oder 1 sein kann, wobei falls n = 0 ist, dann ist R₃ = C₁-C₄-Bromalkyl oder Br, umgesetzt wird.

R₁ und R₂ stellen bevorzugt gemeinsam einen ggf. durch C₁-C₆-Alkyl substituierten aromatischen C₆-Ring dar. Besonders bevorzugt stellen R₁ und R₂ einen Benzolring dar, welcher gegebenenfalls durch C₁-C₄-Alkyl substituiert ist. Ganz besonders bevorzugt stellen Verbindungen der Formel (I) Phthalimid, Succinimid oder Maleinimid dar. Noch weiter bevorzugt ist die Verbindung der Formel (I) Phthalimid. Bei Verwendung von Phthalimid werden erfindungsgemäß phthalimidomethylierte Perlpolymerisate hergestellt. Als Salze der Verbindungen der Formel (I) werden vorzugsweise Additionsprodukte anorganischer oder organischer Säuren oder Laugen mit Verbindungen der Formel (I), wie Alkali- oder Erdalkalimetallsalze, Chlorid, Sulfat, Sulfit, Phosphat, Phosphit, Acetat, Oxalat, Tartrat, Formiat oder Citrat verstanden. Falls Salze eingesetzt werden, werden besonders bevorzugt die Chloride oder Sulfate der Verbindungen der Formel (I) eingesetzt.

In Formel (II) steht C₁-C₄-Bromalkyl für einen C₁-C₄-Alkylrest, der einfach durch Bromatome substituiert ist. Beispielhaft und vorzugsweise steht C₁-C₄-Bromalkyl für Brommethyl, 1-Bromethyl, 2-Bromethyl, 1-Brompropyl, 2-Brompropyl, Bromcyclopropyl, 1-Brombutyl-, 2-Brombutyl oder 3-Brombutyl.

Besonders bevorzugt steht C₁-C₄-Bromalkyl für 1-Bromethyl und 2-Bromethyl.

R₃ steht vorzugsweise für C₁-C₄-Bromalkyl.

Vorzugsweise ist n = 1.

C₁-C₆-Alkyl stehen im Rahmen der Erfindung für einen geradkettigen, zyklischen, verzweigten oder unverzweigten Alkylrest mit 1 bis 6 Kohlenstoffatomen. Beispielhaft und vorzugsweise steht C₁-C₆-Alkyl für Methyl, Ethyl, n-Propyl, Isopropyl, Cyclopropyl, n-Propyl, n-, i-, s- oder t-Butyl, Pentyl oder Hexyl.

C₁-C₄-Alkyl stehen im Rahmen der Erfindung für einen geradkettigen, zyklischen, verzweigten oder unverzweigten Alkylrest mit 1 bis 4 Kohlenstoffatomen. Beispielhaft und vorzugsweise steht C₁-C₄-Alkyl für Methyl, Ethyl, n-Propyl, Isopropyl, Cyclopropyl, n-Propyl, n-, i-, s- oder t-Butyl.

Vorzugsweise steht C₁-C₄-Alkyl für Methyl, Ethyl, n-Propyl und Isopropyl.

Unter kondensiertem Formaldehyd werden Kondensate des Formaldehyds verstanden. Die Herstellung solcher Verbindungen erfolgt nach üblichen dem Fachmann bekannten Verfahren. Als kondensierte Formaldehyde werden beispielsweise Verbindungen der Formel (III) eingesetzt 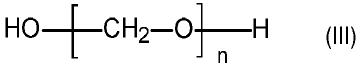 wobei n = 8 bis 100 ist. Bevorzugt werden Verbindungen der Formel (III) eingesetzt, bei denen n = 8 bis 15 ist. Besonders bevorzugt werden Verbindungen der Formel (III) eingesetzt, bei denen n = 8 bis 30 ist.

Es können aber auch zyklische Kondensate wie z.B. Trioxan eingesetzt werden. Besonders bevorzugt werden als kondensiertes Formaldehyd Paraformaldehyd oder Trioxan oder Gemische dieser Verbindungen eingesetzt. Ganz besonders bevorzugt wird als kondensiertes Formaldehyd Paraformaldehyd eingesetzt.

Die Verbindungen der Formel (II) stellen insbesondere Quellmittel für die Perlpolymerisate dar, dienen aber ebenfalls als Lösungsmittel für die weiteren Edukte der Amidoalkylierungsreaktion. Als Verbindung der Formel (II) im Sinne der Erfindung werden vorzugsweise Brommethan, Bromethan, 1-Brompropan, 2-Brompropan, 1-Brombutan, 2-Brombutan, Dibrommethan, 1,2-Dibromethan, 1,1-Dibromethan, 1,3-Dibrompropan, 1,2-Dibrompropan, 1,1-Dibrompropan, 1,4-Dibrombutan oder 1,2-Dibrombutan oder Mischungen dieser Verbindungen eingesetzt. Besonders bevorzugt werden als Verbindungen der Formel (II) Dibrommethan oder 1,3-Dibrompropan oder Mischungen dieser Verbindungen eingesetzt. Ganz besonders bevorzugt wird als Verbindung der Formel (II) Dibrommethan eingesetzt.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure, aliphatische oder aromatische Methan-, Benzol,- oder Toluolsulfonsäuren oder Phosphorsäure eingesetzt. Als organische Protonensäuren können z.B. Oxalsäure, Essigsäure oder Ameisensäure eingesetzt werden. Bevorzugt werden anorganische Protonensäuren eingesetzt. Besonders bevorzugt werden als Protonensäuren Schwefelsäure oder Oleum eingesetzt.

Als Perlpolymerisate werden erfindungsgemäß kugelförmige, vernetzte Polymerisate verstanden. Der Begriff vinylaromatisch im Sinne der Erfindung umfasst polyvinylaromatische und monovinylaromatische Monomere. Zur Herstellung der vinylaromatischen Perlpolymerisate wird beispielsweise mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen. Bevorzugt werden zur Herstellung der vinylaromatischen Perlpolymerisate mindestens eine monovinylaromatische Verbindung und mindestens eine polyvinylaromatische Verbindung eingesetzt.

Als monovinylaromatische Verbindungen im Sinne der vorliegenden Erfindung werden bevorzugt Styrol, Vinyltoluol, Ethylstyrol, α-Methylstyrol, Chlorstyrol und Chlormethylstyrol, eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind Divinylbenzol, Divinyltoluol, Trivinylbenzol, Divinylnaphthalin oder Trivinylnaphthalin.

Die polyvinylaromatischen Verbindungen werden vorzugsweise in Mengen von 1-20 Gew.-%, besonders bevorzugt in Mengen von 2-12 Gew.-%, ganz besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisates ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform sind die vinylaromatischen Perlpolymerisate Styrol/ Divinylbenzol vernetzte Copolymerisate.

In einer bevorzugten Ausführungsform der vorliegenden Erfindung kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten, in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind vorzugsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden vorzugsweise in Mengen von 0,05 bis 2,5 Gew.-%, besonders bevorzugt in Mengen von 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im Perlpolymerisat eine makroporöse Struktur zu erzeugen. Hierfür sind organische Lösungsmittel geeignet, die das entstandene Polymerisat schlecht lösen bzw. quellen. Vorzugsweise seien Hexan, Octan, Isooctan, Isododecan, Methylethylketon, Butanol oder Octanol und deren Isomeren genannt. Besonders bevorzugt wird Isododecan als Porogen eingesetzt. Bevorzugt werden Porogene bei der Herstellung der erfindungsgemäßen amidomethylierten, vinylaromatischen Perlpolymerisate eingesetzt.

Die Begriffe mikroporös oder gelförmig bzw. makroporös sind in der Fachliteratur bereits eingehend beschrieben worden.

Bevorzugte Perlpolymerisate im Sinne der vorliegenden Erfindung weisen eine makroporöse Struktur auf.

Makroporös im Sinne der Erfindung bedeutet vorzugsweise, dass die Poren im Perlpolymerisat ≥ 50 nm sind.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Perlpolymerisate können in heterodisperser oder monodisperser Form hergestellt werden. Die Herstellung heterodisperser Perlpolymerisate geschieht nach allgemeinen, dem Fachmann bekannten Verfahren, z.B. mit Hilfe der Suspensionspolymerisation. Bevorzugt werden monodisperse, vinylaromatische Perlpolymerisate im erfindungsgemäßen Verfahren hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10% des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Das monodisperse Perlpolymerisat kann nach den aus der Literatur bekannten Verfahren hergestellt werden. Bei der Herstellung von monodispersen, vinylaromatischen Perlpolymerisate kann die wässrige Phase gegebenenfalls einen gelösten Polymerisationsinhibitor enthalten. Bevorzugt enthält die wässrige Phase einen gelösten Polymerisationsinhibitor. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitro-sophenylhydroxylamin-Ammoniumsalz oder N-Nitrosophenylhydroxylamin-Aluminiumsalz. Die Konzentration des Inhibitors beträgt vorzugsweise 5 - 1000 ppm bezogen auf die wässrige Phase, besonders bevorzugt 10 - 500 ppm und noch weiter bevorzugt 10 - 250 ppm.

Die Polymerisation der gegebenenfalls mikroverkapselten Monomertröpfchen zum monodispersen, vinylaromatischen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt vorzugsweise 0,05 bis 1 Gew.-% bezogen auf die wässrige Phase, besonders bevorzugt 0,05 bis 0,5 Gew. %.

Die Polymerisation zum monodispersen, vinylaromatischen Perlpolymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8, einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt vorzugsweise 0,5 - 500 mmol/l, besonders bevorzugt 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt vorzugsweise 1 : 0,75 bis 1 : 20, besonders bevorzugt 1 : 1 bis 1 : 6.

Die Polymerisationstemperatur richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, vorzugsweise durch Filtrieren oder Dekantieren, isoliert und gegebenenfalls gewaschen.

In einem weiteren Schritt wird das vinylaromatische Perlpolymerisat mit mindestens einer Verbindung der Formel (I), mindestens einem kondensierten Formaldehyd in Gegenwart mindestens einer Verbindung der Formel (II) und in Gegenwart mindestens einer Protonensäure zum amidomethylierten, vinylaromatischen Perlpolymerisat umgesetzt.

Das vinylaromatische Perlpolymerisat kann beispielsweise zunächst aufgequollen werden und in diesem Zustand mit einer Mischung aus den Verbindungen der Formel (I), den kondensiertem Formaldehyd und den Protonensäuren vermischt werden. Genauso könnte aber zunächst die Verbindungen der Formel (I) zu dem vernetzten Perlpolymerisate in Gegenwart der Verbindung der Formel (II) hinzugegeben werden und danach das kondensierte Formaldehyd und dann die Protonensäuren hinzugefügt werden. Oder man legt zunächst die Verbindungen der Formeln (I), (II) und (III) vor, gibt dazu die Protonensäure und anschließend das vinylaromatische Perlpolymerisat. Bevorzugt wird zunächst das vernetzte Perlpolymerisat in Gegenwart der Verbindung der Formel (II) aufgequollen und dann die Verbindungen der Formel (I) oder das kondensierte Formaldehyd hinzugegeben und dann die Protonensäure hinzugefügt. Die Abtrennung der Verbindung der Formel (II) erfolgt vorzugsweise destillativ. Die Aufarbeitung der Reaktionsprodukte erfolgt nach dem Fachmann bekannten Verfahren. Bevorzugt wird die Reaktionsmischung erwärmt. Bevorzugt verläuft die Reaktion in einer Eintopfreaktion. Die Reaktion wird vorzugsweise ohne Abtrennung von entstehenden Zwischenprodukten aus der Reaktionslösung durchgeführt.

Vorzugsweise beträgt das Stoffmengenverhältnis der Verbindungen der Formel (II) zu den Verbindungen der Formel (I) 2:1 bis 15:1. Besonders bevorzugt beträgt das Stoffmengenverhältnis der Verbindungen der Formel (II) zu den Verbindungen der Formel (I) 3,5:1 bis 10:1.

Das Stoffmengenverhältnis der aromatischen Gruppen im vinylaromatischen Perlpolymerisat zu den Verbindungen der Formel (I) beträgt beispielsweise 0,2:1 bis 2,5:1. Bevorzugt beträgt das Stoffmengenverhältnis der aromatischen Gruppen im vinylaromatischen Perlpolymerisat zu den Verbindungen der Formel (I) 0,5:1 bis 1,8:1.

Das Stoffmengenverhältnis von Verbindungen der Formel (I) zu kondensiertem Formaldehyd beträgt beispielsweise 0,7:1 bis 1,3:1. Bevorzugt beträgt das Stoffmengenverhältnis von Verbindungen der Formel (I) zu kondensiertem Formaldehyd 0,95:1 bis 1,1:1.

Das Stoffmengenverhältnis der Verbindungen der Formel (I) zu der eingesetzten Protonensäure beträgt vorzugsweise zwischen 10:1 bis 1:10. Besonders bevorzugt beträgt das Stoffmengenverhältnis der Verbindungen der Formel (I) zu der eingesetzten Protonensäure 1:1 bis 1:10.

Falls als Protonensäure Schwefelsäure eingesetzt wird, dann beträgt die Konzentration der eingesetzten Schwefelsäure vorzugsweise 70% bis 100%.

Die Reaktionstemperatur für die Umsetzung der vinylaromatischen Perlpolymerisate zu den amidomethylierten, vinylaromatischen Perlpolymerisaten liegt vorzugsweise zwischen 0°C und dem Siedepunkt der Quellungsmitteln gemessen unter Standardbedingungen bei 1 bar. Besonders bevorzugt liegt die Reaktionstemperatur für die Umsetzung der vinylaromatischen Perlpolymerisate zu den amidomethylierten, vinylaromatischen Perlpolymerisaten zwischen 10°C und 80°C.

Die Reaktion wird im Allgemeinen unter Normaldruck durchgeführt. Die Reaktion kann aber auch bei höheren oder niedrigeren Drücken durchgeführt werden.

Die amidomethylierten, vinylaromatischen Perlpolymerisate sind insbesondere bedeutsame Zwischenprodukte für die Herstellung von Ionenaustauschern und Chelatharzen. So lassen sich beispielsweise aus den, nach dem erfindungsgemäßen Verfahren hergestellten amidomethylierten, vinylaromatischen Perlpolymerisaten, Ionenaustauscher, insbesondere Anionenaustauscher, und Chelatharze herstellen.

Das amidomethylierte, vinylaromatische Perlpolymerisat kann in einem weiteren Schritt zu aminomethylierten, vinylaromatischen Perlpolymerisaten umgesetzt werden. Bevorzugt wird das amidomethylierte, vinylaromatische Perlpolymerisat weiter zu aminomethylierten, vinylaromatischen Perlpolymerisaten umgesetzt. Vorzugsweise erfolgt die Umsetzung durch Behandeln des amidomethylierten, vinylaromatischen Perlpolymerisates mit wässrigen oder alkoholischen Lösungen eines Alkalihydroxids, wie Natriumhydroxid oder Kaliumhydroxid bei Temperaturen zwischen 100°C und 250°C, vorzugsweise bei Temperaturen zwischen 120°C und 190°C. Bevorzugt erfolgt die Umsetzung mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%.

Das dabei entstehende aminomethylierte, vinylaromatische Perlpolymerisat kann mit vollentsalztem Wasser alkalifrei gewaschen werden.

Das aminomethylierte, vinylaromatische Perlpolymerisat kann mit weiteren Alkylierungsmitteln zu Anionenaustauschern oder Chelatharzen umgesetzt werden oder auch als Ionenaustauscher verwendet werden.

Weiterhin ist möglich, die erfindungsgemäßen aminomethylierten, vinylaromatischen Perlpolymerisate mit Halomethylstickstoffheterocyclen, wie z.B. 2-Chlormethylpyridin, 3-Chlormethylpyridin oder 4-Chlormethylpyridin umzusetzen und dadurch Chelatharze herzustellen.

Gegenstand der vorliegenden Erfindung ist daher zudem ein Verfahren zur Herstellung von Anionenaustauschern und Chelatharzen, bei dem
a) Monomertröpfchen aus mindestens einer monovinylaromatischen Verbindung und mindestens einer polyvinylaromatischen Verbindung sowie gegebenenfalls einem Porogen und zumindest einem Initiator, zu einem vinylaromatischen Perlpolymerisat umgesetzt werden,
b) dieses vinylaromatische Perlpolymerisat in Gegenwart von Verbindungen der Formel (II) und in Gegenwart von Verbindungen der Formel (I) und mindestens einem kondensiertem Formaldehyd und in Gegenwart mindestens einer Protonensäure, zu amidomethyliertem, vinylaromatischen Perlpolymerisat umgesetzt wird und
c) das amidomethylierte, vinylaromatischen Perlpolymerisat zu aminomethyliertem, vinylaromatischem Perlpolymerisat umgesetzt wird und
d) schließlich das aminomethylierte, vinylaromatische Perlpolymerisat mit Alkylierungsmittel zu Anionenaustauschern und Chelatharzen umgesetzt wird.

Bevorzugte Alkylierungsmittel im Sinne der vorliegenden Erfindung sind Alkylhalogenide, Halogenalkohole, Alkylsulfate, Dialkylsulfate, Alkyloxide, Leuckart-Wallach-Reagenzien oder Kombinationen dieser Alkylierungsmittel untereinander bzw. nacheinander.

Besonders bevorzugt werden Chlormethan, Ethylenoxid, Propylenoxid sowie die Leuckart-Wallach-Reagenzien oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Als Suspensionsmedium werden vorzugsweise Wasser oder Mineralsäuren eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird vorzugsweise bei Temperaturen von 20 bis 150°C durchgeführt, besonders bevorzugt bei 40°C bis 110°C. Verfahrensschritt d) wird vorzugsweise bei Drücken von Normaldruck bis 6 bar, besonders bevorzugt bei Normaldruck bis 4 bar durchgeführt.

Mit der vorliegenden Erfindung wird ein neues Herstellungsverfahren für amidomethylierte, vinylaromatische Perlpolymerisate zur Verfügung gestellt, mit der diese, insbesondere phthalimidomethylierte Perlpolymerisate, und aminomethylierte Perlpolymerisate, effizient, unter Berücksichtigung ökologischer Gesichtspunkte und in hoher Ausbeute, hergestellt werden können.

### Beispiel 1

### 1.1 Herstellung des monodispersen, makroporösen Perlpolymerisates auf der Basis von Styrol, Divinylbenzol und Ethylstyrol

In einem 10 I Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,4 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet.

Man erhält 1893 g eines Perlpolymerisates mit enger Teilchengrößenverteilung.

### 1.2. Herstellung eines phthalimidomethylierten, monodispersen, makroporösen Perlpolymerisates mit dem Quellungsmittel Dibrommethan

In einem Rundkolben werden 1522 g Dibrommethan vorgelegt. Dazu gibt man 105,7 g Perlpolymerisat aus Beispiel 1.1, 150,1 g Phthalimid und 31,9 g Paraformaldehyd und lässt anschließend 30 min bei Raumtemperatur rühren. Innerhalb von 30 min werden 375,1 g Schwefelsäure (96%-ig) zugetropft. Anschließend wird 24 h bei Raumtemperatur gerührt und danach die Perlen auf einem Sieb abgetrennt und mit Wasser, Aceton und Wasser gewaschen.
Volumenausbeute: 670 ml
Stickstoffgehalt (nach Trocknung): 5,3%

### 1.3. Herstellung eines phthalimidomethylierten, monodispersen, makroporösen Perlpolymerisates mit dem Quellungsmittel 1,3-Dibrompropan

In einem Rundkolben werden 1206 g 1,3-Dibrompropan vorgelegt. Dazu gibt man 105,7 g Perlpolymerisat aus Beispiel 1.1, 150,1 g Phthalimid und 31,9 g Paraformaldehyd und lässt anschließend 30 min bei Raumtemperatur rühren. Innerhalb von 30 min werden 375,1 g Schwefelsäure (96%-ig) zugetropft. Anschließend wird 24 h bei Raumtemperatur gerührt und danach die Perlen auf einem Sieb abgetrennt und mit Wasser, Aceton und Wasser gewaschen.
Volumenausbeute: 690 ml
Stickstoffgehalt (nach Trocknung): 5,2%

### Beispiel 2

### Vergleichsbeispiel (nicht erfindungsgemäß)

### 2.1 Herstellung eines phthalimidomethylierten, monodispersen, makroporösen Perlpolymerisates mit dem Quellungsmittel Dichlorethan

In einem Rundkolben werden 625 g 1,2-Dichlorethan vorgelegt. Dazu gibt man 103,6 g Perlpolymerisat aus Beispiel 1.1, 147,1 g Phthalimid und 31,3 g Paraformaldehyd und lässt anschließend 30 min bei Raumtemperatur rühren. Innerhalb von 30 min werden 363,3 g Schwefelsäure (96%-ig) zugetropft und anschließend wird 24 h bei Raumtemperatur gerührt. Danach werden die Perlen auf einem Sieb abgetrennt und mit Wasser, Aceton und Wasser gewaschen.
Volumenausbeute: 605 ml
Stickstoffgehalt (nach Trocknung): 5,1%

### Beispiel 3

### Vergleichsbeispiel (nicht erfindungsgemäß)

### 3.1 Herstellung eines phthalimidomethylierten, monodispersen, makroporösen Perlpolymerisates mit dem Quellungsmittel Bromtrichlormethan

In einem Rundkolben werden 1209 g Bromtrichlormethan vorgelegt. Dazu gibt man 105,7 g Perlpolymerisat aus Beispiel 1.1, 150,1 g Phthalimid und 31,9 g Paraformaldehyd und lässt anschließend 30 min bei Raumtemperatur rühren. Innerhalb von 30 min werden 375,1 g Schwefelsäure (96%-ig) zugetropft. Anschließend wird 24 h bei Raumtemperatur gerührt und danach die Perlen auf einem Sieb abgetrennt und mit Wasser, Aceton und Wasser gewaschen.
Volumenausbeute: 540 ml
Stickstoffgehalt (nach Trocknung): 3,5%

Beispiel 1 belegt, dass bei der Verwendung von Dibrommethan und 1,3-Dibrompropan als Quellungsmittel höhere Substitutionsgrade im Perlpolymerisat mit Amidomethylgruppen (siehe Stickstoffgehalt) erzielt werden können als im Vergleich zu aus dem Stand der Technik bekannten Quellungsmitteln.

## Patentansprüche

1. Verfahren zur Herstellung von amidomethylierten, vinylaromatischen Perlpolymerisaten, **dadurch gekennzeichnet, dass** mindestens ein vinylaromatisches Perlpolymerisat mit mindestens einer Verbindung der Formel (I) oder deren Salze 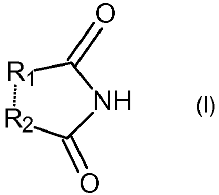 wobei R₁ = -CH-(C₁-C₆-Alkyl) oder -CH₂- und R₂ = -CH-(C₁-C₆-Alkyl) oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH= und
mindestens einem kondensierten Formaldehyd
in Gegenwart mindestens einer Protonensäure und
in Gegenwart mindestens einer Verbindung der Formel (II)
H₍₃₋ₙ₎C(Br)ₙR₃ (II)
wobei R₃ = C₁-C₄-Alkyl, Br, H oder C₁-C₄-Bromalkyl ist und n = 0 oder 1 sein kann, wobei falls n = 0 ist, dann ist R₃= C₁-C₄-Bromalkyl oder Br, umgesetzt wird.

2. Verfahren gemäß Anspruch 1, **dadurch gekennzeichnet, dass** als Verbindungen der Formel (II) Dibrommethan, 1,3-Dibrompropan oder Mischungen davon eingesetzt werden.

3. Verfahren gemäß einem der Ansprüche 1 oder 2, **dadurch gekennzeichnet, dass** als Protonensäuren Schwefelsäure eingesetzt wird.

4. Verfahren gemäß einem oder mehreren der Ansprüche 1 bis 3, **dadurch gekennzeichnet, dass** als kondensierte Formaldehyde Paraformaldehyd oder Trioxan oder Gemische aus diesen Verbindungen eingesetzt werden.

5. Verfahren gemäß einem oder mehreren der Ansprüche 1 bis 4, **dadurch gekennzeichnet, dass** als vinylaromatisches Perlpolymerisat ein Styrol / Divinylbenzol Copolymerisat eingesetzt wird.

6. Verfahren gemäß einem oder mehreren der Ansprüche 1 bis 5, **dadurch gekennzeichnet, dass** als Verbindung der Formel (I) Phthalimid oder dessen Salze eingesetzt wird.

7. Verfahren gemäß einem oder mehreren der Ansprüche 1 bis 6, **dadurch gekennzeichnet, dass** als vinylaromatisches Perlpolymerisat ein monodisperses, vinylaromatisches Perlpolymerisat eingesetzt wird.

8. Verfahren gemäß einem oder mehreren der Ansprüche 1 bis 7, **dadurch gekennzeichnet, dass** als vinylaromatisches Perlpolymerisat ein makroporöses, monodisperses, vinylaromatisches Perlpolymerisat eingesetzt wird.

9. Verfahren gemäß einem oder mehreren der Ansprüche 1 bis 8, **dadurch gekennzeichnet, dass** das Stoffmengenverhältnis der Verbindungen der Formel (II) zu den Verbindungen der Formel (I) 3,5:1 bis 10:1 beträgt.

10. Verfahren gemäß einem oder mehreren der Ansprüche 1 bis 9, **dadurch gekennzeichnet, dass** das Stoffmengenverhältnis der aromatischen Gruppen im vinylaromatischen Perlpolymerisat zu den Verbindungen der Formel (I) 0,5:1 bis 1,8:1 beträgt.

11. Verfahren gemäß einem oder mehreren der Ansprüche 1 bis 10, **dadurch gekennzeichnet, dass** das Stoffmengenverhältnis von Verbindungen der Formel (I) zu kondensiertem Formaldehyd 0,95:1 bis 1,1:1 beträgt.

12. Verfahren gemäß einem oder mehreren der Ansprüche 1 bis 11, **dadurch gekennzeichnet, dass** das Stoffmengenverhältnis der Verbindungen der Formel (I) zu der eingesetzten Protonensäure zwischen 10:1 bis 1:10 liegt.

13. Verfahren gemäß einem oder mehreren der Ansprüche 1 bis 12, **dadurch gekennzeichnet, dass** die Reaktionstemperatur für die Umsetzung der vinylaromatischen Perlpolymerisate zu den amidomethylierten, vinylaromatischen Perlpolymerisaten zwischen 10°C und 80°C liegt.

## Claims

1. Process for preparing amidomethylated vinylaromatic bead polymers, **characterized in that** at least one vinylaromatic bead polymer is reacted with at least one compound of formula (I) or salts thereof 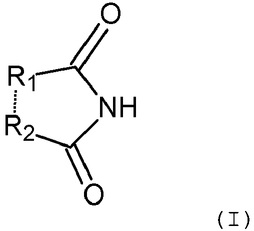 where R₁ = -CH-(C₁-C₆-alkyl) or -CH₂- and R₂ = -CH-(C₁-C₆-alkyl) or -CH₂- or R₁ and R₂ are two carbon atoms of an aromatic C₆ ring optionally substituted by one or two C₁-C₆-alkyl radicals, or R₁ and R₂ are each -CH=, and
at least one condensed formaldehyde
in the presence of at least one protic acid and
in the presence of at least one compound of the formula (II)
H₍₃₋ₙ)C(Br) nR₃ (II)
where R₃ = C₁-C₄-alkyl, Br, H or C₁-C₄-bromoalkyl and n may be 0 or 1, where, if n = 0, R₃ = C₁-C₄-bromoalkyl or Br.

2. Process according to Claim 1, **characterized in that** the compounds of the formula (II) used are dibromomethane, 1,3-dibromopropane or mixtures thereof.

3. Process according to either of Claims 1 and 2, **characterized in that** the protic acid used is sulfuric acid.

4. Process according to one or more of Claims 1 to 3, **characterized in that** the condensed formaldehyde used is paraformaldehyde or trioxane or mixtures of these compounds.

5. Process according to one or more of Claims 1 to 4, **characterized in that** the vinylaromatic bead polymer used is a styrene/divinylbenzene copolymer.

6. Process according to one or more of Claims 1 to 5, **characterized in that** the compound of the formula (I) used is phthalimide or salts thereof.

7. Process according toone or more of Claims 1 to 6, **characterized in that** the vinylaromatic bead polymer used is a monodisperse vinylaromatic bead polymer.

8. Process according to one or more of Claims 1 to 7, **characterized in that** the vinylaromatic bead polymer used is a macroporous, monodisperse vinylaromatic bead polymer.

9. Process according to one or more of Claims 1 to 8, **characterized in that** the molar ratio of the compounds of the formula (II) to the compounds of the formula (I) is 3.5:1 to 10:1.

10. Process according to one or more of Claims 1 to 9, **characterized in that** the molar ratio of the aromatic groups in the vinylaromatic bead polymer to the compounds of the formula (I) is 0.5:1 to 1.8:1.

11. Process according to one or more of Claims 1 to 10, **characterized in that** the molar ratio of compounds of the formula (I) to condensed formaldehyde is 0.95:1 to 1.1:1.

12. Process according to one or more of Claims 1 to 11, **characterized in that** the molar ratio of the compounds of the formula (I) to the protic acid used is 10:1 to 1:10.

13. Process according to one or more of Claims 1 to 12, **characterized in that** the reaction temperature for the conversion of the vinylaromatic bead polymers to the amidomethylated vinylaromatic bead polymers is between 10°C and 80°C.

## Revendications

1. Procédé pour la préparation de polymères en perles amidométhylés, vinylaromatiques, **caractérisé en ce qu'**au moins un polymère en perles vinylaromatique est transformé avec au moins un composé de formule (I) ou ses sels 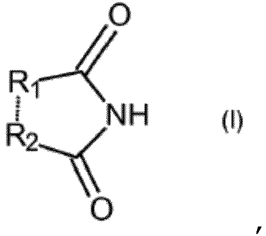 R₁ = -CH- (C₁-₆-alkyle) ou -CH₂- et R₂ = -CH- (C₁₋₆-alkyle) ou -CH₂- ou R₁ et R₂ étant deux atomes de carbone d'un cycle aromatique en C₆ éventuellement substitué par un ou deux radicaux C₁₋₆-alkyle ou R₁ et R₂ représentant à chaque fois -CH= et
au moins un formaldéhyde condensé
en présence d'au moins un acide protonique et
en présence d'au moins un composé de formule (II)
H₍₃₋ₙ₎C(Br)ₙR₃ (II)
R₃ = C₁₋₄-alkyle, Br, H ou C₁₋₄-bromoalkyle et n pouvant être = 0 ou 1,
dans laquelle au cas où n = 0, alors R₃ = C₁₋₄-bromoalkyle ou Br.

2. Procédé selon la revendication 1, **caractérisé en ce que** le dibromométhane, le 1,3-dibromopropane ou des mélanges correspondants sont utilisés en tant que composés de formule (II).

3. Procédé selon l'une quelconque des revendications 1 et 2, **caractérisé en ce que** de l'acide sulfurique est utilisé en tant qu'acides protoniques.

4. Procédé selon l'une quelconque ou plusieurs des revendications 1 à 3, **caractérisé en ce que** du paraformaldéhyde ou du trioxanne ou des mélanges de ces composés sont utilisés en tant que formaldéhydes condensés.

5. Procédé selon l'une quelconque ou plusieurs des revendications 1 à 4, **caractérisé en ce qu'**un copolymère de styrène/divinylbenzène est utilisé en tant que polymère en perles vinylaromatique.

6. Procédé selon l'une quelconque ou plusieurs des revendications 1 à 5, **caractérisé en ce que** le phtalimide ou ses sels est utilisé en tant que composé de formule (I).

7. Procédé selon l'une quelconque ou plusieurs des revendications 1 à 6, **caractérisé en ce qu'**un polymère en perles vinylaromatique, monodispersé est utilisé en tant que polymère en perles vinylaromatique.

8. Procédé selon l'une quelconque ou plusieurs des revendications 1 à 7, **caractérisé en ce qu'**un polymère en perles vinylaromatique, monodispersé, macroporeux est utilisé en tant que polymère en perles vinylaromatique.

9. Procédé selon l'une quelconque ou plusieurs des revendications 1 à 8, **caractérisé en ce que** le rapport molaire des composés de formule (II) sur les composés de formule (I) est de 3,5 : 1 à 10 : 1.

10. Procédé selon l'une quelconque ou plusieurs des revendications 1 à 9, **caractérisé en ce que** le rapport molaire des groupes aromatiques dans le polymère en perles vinylaromatique sur les composés de formule (I) est de 0,5 : 1 à 1,8 : 1.

11. Procédé selon l'une quelconque ou plusieurs des revendications 1 à 10, **caractérisé en ce que** le rapport molaire des composés de formule (I) sur le formaldéhyde condensé est de 0,95 : 1 à 1,1 : 1.

12. Procédé selon l'une quelconque ou plusieurs des revendications 1 à 11, **caractérisé en ce que** le rapport molaire des composés de formule (I) sur l'acide protonique utilisé se situe entre 10 : 1 et 1 : 10.

13. Procédé selon l'une quelconque ou plusieurs des revendications 1 à 12, **caractérisé en ce que** la température de réaction pour la transformation des polymères en perles vinylaromatiques pour donner les polymères en perles vinylaromatiques, amidométhylés se situe entre 10 °C et 80 °C.
